# EUROPEAN PATENT SPECIFICATION

(11) **EP 0 588 219 B1**
(45) Date of publication and mention of the grant of the patent: **11.11.1998**
(21) Application number: 93114369.7
(22) Date of filing: 08.09.1993
(51) Int. Cl.: G11B 23/107, G11B 23/037

(54) **Single reel cartridge with narrow width, windowed flange**
Einspulenkasette mit schmalen Flaschen mit Offnungen
Cassette à bobine comportant des flasques minces à ouvertures

(30) Priority: 14.09.1992 US 944648
(43) Date of publication of application: 23.03.1994
(73) Proprietor: Imation Corp., Oakdale, MN 55128 (US); STORAGE TECHNOLOGY CORPORATION, Louisville, Collorado 80028-0224 (US)
(72) Inventor: Martin, Robert C. c/o Minn. Mining and Manuf. Com., St Paul, Minnesota 55133-3427 (US); Janssen, Donovan M. c/o Stor. Techn. Corp., Louisville, Colorado 80028-0224 (US)
(74) Representative: Hilleringmann, Jochen, Dipl.-Ing.

(56) References cited:
- EP-A- 0 136 504
- INTERNATIONAL STANDARD ORGANISATION, no.1864, 15 March 1985, ZURICH pages 9 - 10, XP120853 'information processing - unrecorded 12,7 mm (0.5in) wide magnetic tape for information interchange'
- IBM TECHNICAL DISCLOSURE BULLETIN, vol.5, no.1, June 1962 page 11 DOMBROSKI 'flexible tape reel'

## Description

The present invention relates to tape reels. More particularly, the present invention relates to tape reels for use in single reel cartridges, as known from International Standards Organisation, no. 1864, 15 March 1985, ZURICH, pages 9-10, XP120853.

Single reel data tape cartridges, one generation of which is known as 3480 type cartridges, include a reel containing magnetic tape with a leader block attached to the free end of the tape as it extends from the reel. The cartridge is generally rectangular except for one corner which is angled and includes a leader block window. The leader block window holds the leader block and permits the tape to exit from the cartridge for threading through a tape drive when the leader block is removed. When the leader block is snapped into the window, the window is covered.

The leader block is generally rectangular and has a cutout which combines with a pin to hold the tape. The front surface of the leader block includes a slot for engaging an automatic threading apparatus in a reel-to-reel magnetic tape drive apparatus. The front surface of the leader block is generally cylindrical and has a rounded boss which engages with an inclined surface of the corner of the cartridge. The rear surface is rounded to form a portion of an arc of a radius to match the periphery of the take-up reel hub in the tape drive apparatus as the leader block fits into the slot in the hub. A compliant section may be formed on the leader block to permit the leader block to compress at its rear surface to accommodate especially the first layer of tape when the tape is wound onto the take-up reel.

The tape drive apparatus includes a threading apparatus for connection to a single reel tape cartridge. The drive apparatus includes a drive motor for the supply reel mounted beneath a base plate so that its shaft extends normal to and slightly above a surface of the base plate. A take-up reel is mounted on the base plate and is attached to the motor. The cartridge reel, when coupled to the motor, lies in substantially the same plane as a hub of the take-up reel so that the tape moves in a plane normal to both motor shafts when being transported. After the threading of the tape, transfer of the tape between the supply reel and the take-up reel is achieved by controlling the driving motors for the reels. The tape passes a roller guide, an air bearing guide, a magnetic transducer head, a second air bearing guide, and a roller of a tension transducer.

Known tape reels for single reel cartridges are used with half inch tape which has a nominal width of 1.265 cm (0.498 in). These reels typically have a cylindrical hub and a flange mounted on each axial end of the hub. The hub includes a cylindrical tape winding surface which extends between the two ends. The flanges generally are tapered to provide a perpendicular distance between the flanges which increases from a minimum at the inner diameter of the flanges adjacent the hub to a maximum at the outer diameter of the flanges at their edges. The perpendicular distance between the flanges at the inner diameter is typically 1.306 cm (0.514 in), providing 0.040 cm (0.016 in), 3.2% of the nominal width of the tape, of total clearance between the edge of the tape and the flanges. The perpendicular distance between the flanges at the outer diameter is typically 1.377 cm (0.542 in), providing 0.112 cm (0.044 in), 8.8% of the nominal width of the tape, of total clearance between the edge of the tape and the flanges. The difference between these perpendicular distances is the taper and is 0.071 cm (0.028 in).

Thus, the perpendicular distance between the upper flange and the lower flange tapers from the inner diameter to the outer diameter by a maximum of 5.6% of the nominal width of the tape to be wound on the reel. These distances provide too much play in which the tape can wander, allowing as much as 0.112 cm (0.044 in) of stacking error in the tape. This causes data transfer quality to deteriorate. Also, unsupported edges of tape strands which wind out of the centerline of the tape pack as popped strands can crease due to stress relaxation of the base film. These creases can cause head-to-tape spacing and signal losses.

In International Standards Organisation, no. 1864, 15 March 1985, ZURICH, pages 9-10, XP120853, a tape reel for use in a data tape cartridge is defined having a substantially cylindrical hub having upper and lower flanges at its axial ends. The perpendicular distance between the flanges is greater than the width of the tape to be wound on the winding surface of the hub by a maximum of 6.1 %.

Moreover, tape reels with windowed flanges have been used in video and audio tape cartridges (see for example IBM Technical Disclosure Bulletin, vol.5, no.1, June 1962, page 11) for cosmetic purposes as the windows provide no function at the low tape speeds at which these cartridges operate. Rough backside coatings are used to promote the escape of air from between the tape layers in data tape cartridges during winding to produce more uniform tape pack winding than smooth tapes due to the increased cross-sectional area for the escape of air.

It is the object of the present invention to provide a tape reel in which tape pack winding uniformity is improved.

According to the invention, this object is solved by a tape reel as defined in claim 1. The features of the subclaims relate to preferred embodiments of the invention.

A single reel data tape cartridge according to the present invention includes a reel containing magnetic tape with a leader block attached to the free end of the tape as it extends from the reel. The tape cartridge is used within a tape drive apparatus which includes a mechanism which interacts with the tape cartridge to sense whether the tape can be erased and recorded over or whether the tape is write-protected. The front wall has a record opening which interacts with the cartridge drive system.

The tape reel of the invention includes a cylindrical hub having a cylindrical tape winding surface, an upper flange mounted on one axial end of the hub, and a lower flange mounted on the other axial end of the hub. The reel is provided with at least one window in one of the flanges while the other flange is closed or solid. This design permits air to escape from between adjacent winds of tape during winding of the tape on the reel. This causes the tape to wind against the other one of the flanges throughout the winding process.

The perpendicular distance between the upper flange and the lower flange of the tape reel of the invention is reduced. This distance is greater than the nominal width of the tape to be wound on the reel by a maximum of only 6.1 %. Preferably, the upper flange and the lower flange have an inner diameter corresponding substantially to the diameter of the hub and an outer diameter greater than the inner diameter. In one version, the perpendicular distance between the upper flange and the lower flange tapers from the inner diameter to the outer diameter by a maximum of 2.9 % of the nominal width of the tape to be wound on the reel. In another version, the perpendicular distance between the upper flange and the lower flange remains substantially constant.

In the following, preferred embodiments of the invention will be described in more detail referring to the drawing in which:
Figure 1 is an exploded perspective view of a single reel tape cartridge having a tape reel of the present invention,
Figure 2 is a cross-sectional view of a tape reel of the present invention,
Figure 3 is a top view of the tape reel of Figure 2,
Figure 4 is a bottom view of the tape reel of Figure 2, and
Figure 5 is a cross-sectional view of a tape reel according to another embodiment of the present invention.

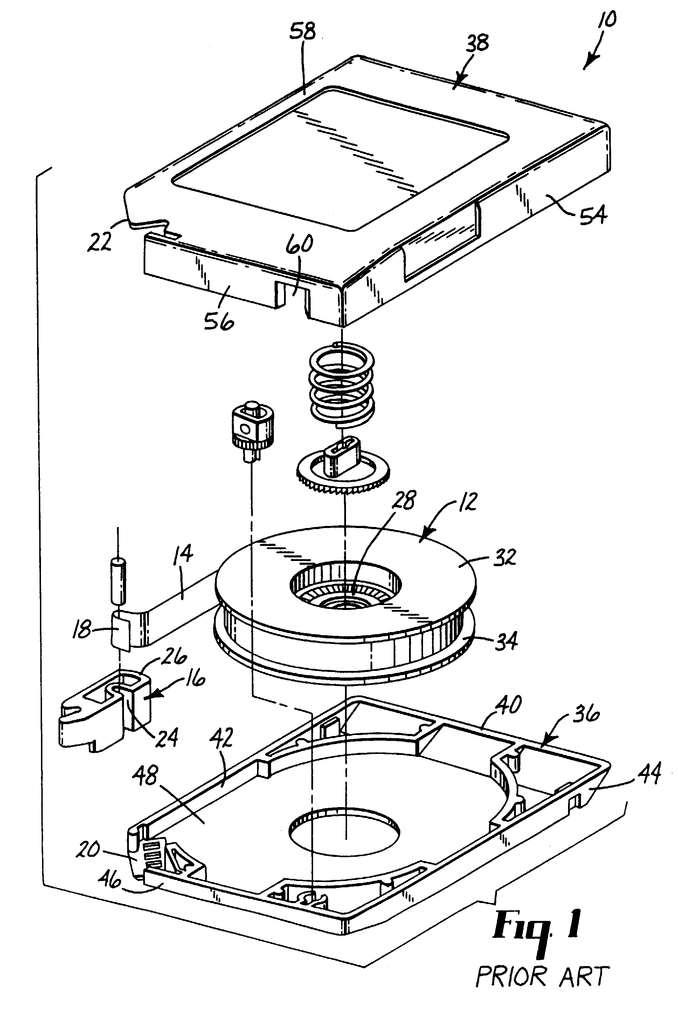

A single reel data tape cartridge 10, such as a 3480 type tape cartridge shown in Figure 1, includes a tape reel 12 containing magnetic tape 14 with a leader block 16 attached to the free end 18 of the tape 14 as it extends from the reel 12. The cartridge 10 is generally rectangular except for one corner 20 which is angled and includes a leader block window 22. The leader block window 22 holds the leader block 16 and is an opening for the tape 14 to exit from the cartridge 10 for threading through a tape drive when the leader block 16 is removed. When the leader block 16 is snapped into the window 22, the window 22 is covered.

The front surface of the leader block 16 includes a slot 24 for engaging an automatic threading apparatus of a reel-to-reel magnetic tape drive apparatus and engages an inclined surface of the corner of the cartridge. The rear surface is rounded 26 to form a portion of an arc of a radius to match the periphery of the take-up reel hub in the tape drive apparatus as the leader block 16 fits into the slot in the hub. A compliant section may be formed on the leader block 16 to permit the leader block 16 to compress at its rear surface to accommodate especially the first layer of tape 14 when the tape 14 is wound onto the take-up reel. The tape reel 12 includes a cylindrical hub 28 having a cylindrical tape winding surface 30, an upper flange 32 mounted on one axial end of the hub, and a lower flange 34 mounted on the other axial end of the hub.

The cartridge 10 is formed of a base 36 and a cover 38 which combine to form a housing. The base 36 includes a rear wall 40, two opposing side walls 42, 44, a front wall 46, and a lower wall 48 connecting the rear, front, and side walls. The cover 38 includes a rear wall, two opposing side walls 54, a front wall 56, and an upper wall 58 connecting the rear, front, and side walls. The lower wall 48 and the upper wall 58 are the major walls of the housing.

The tape drive apparatus includes a mechanism which interacts with the tape cartridge 10 to sense whether the tape 14 can be erased and recorded over or whether the tape is write-protected. The front wall 46, 56 of the cartridge has a record opening 60 which is interactable with the cartridge drive system. An erasure preventing device is locatable in the record opening 60. When the erasure preventing device blocks the record opening 60, the tape 14 can be erased. When the erasure preventing device unblocks the record opening 60, the tape drive apparatus mechanism disables the recording function to prevent accidental erasure and the tape 14 cannot be erased.

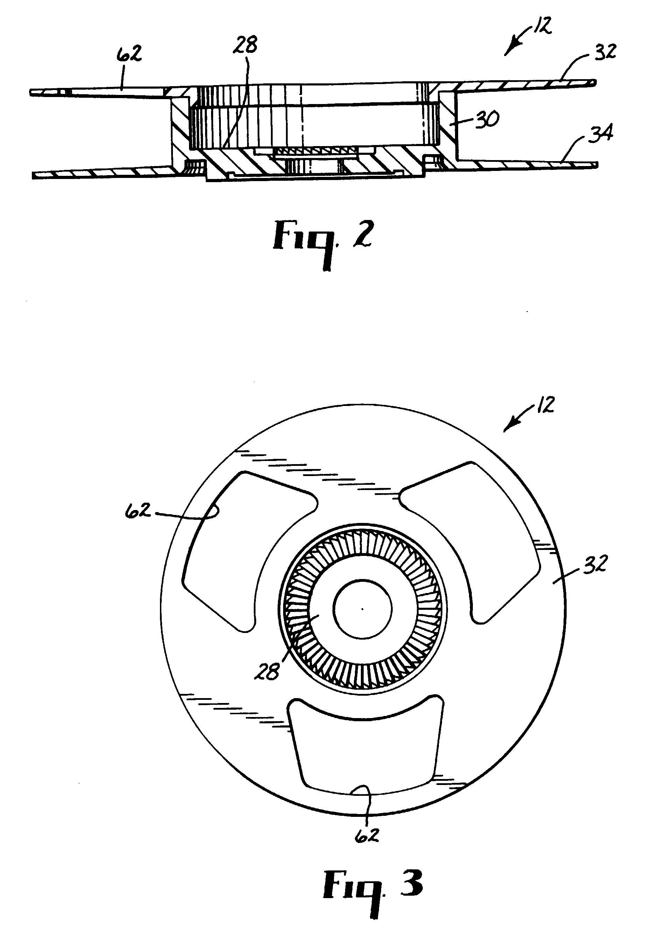

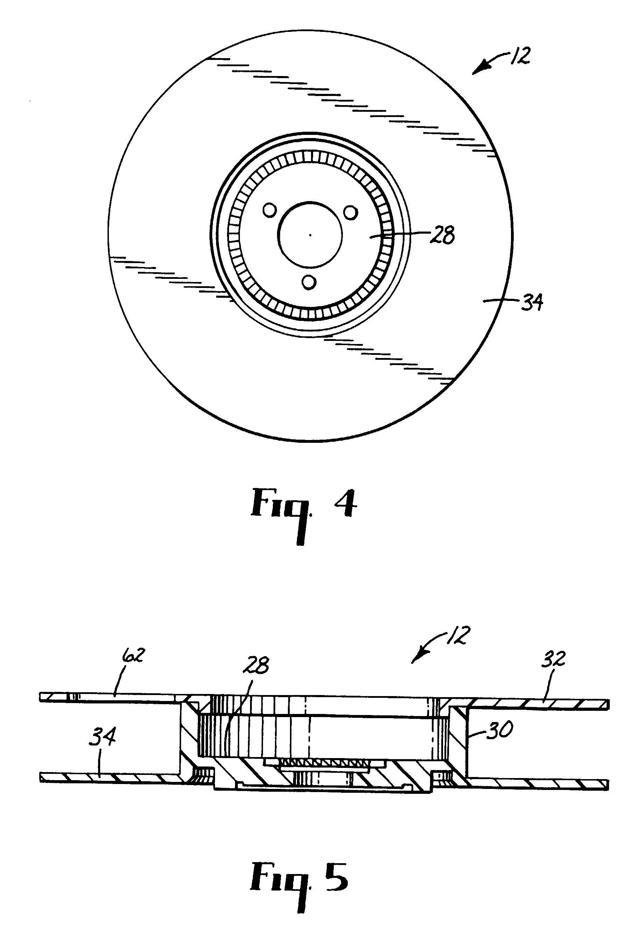

Referring to Figures 2-4, windows 62 are formed in at least one of the flanges 32, 34 to permit air to escape from between adjacent winds of tape 14 during winding of the tape on the reel 12.
Preferably, the windows 62 are formed in only the upper flange 32 while the lower flange 34 is solid and the tape 14 winds against the lower flange 34 throughout the winding process. The combination of a windowed upper flange 32 with a solid lower flange 34 results in air escaping from the top of the tape pack on the reel 12 while the wedge of air which forms between successive tape layers biases the tape against the lower flange 34. This improves the tape winding uniformity, particularly at high winding speeds, and requires less forceful edge guiding of the tape in the drive. Unlike the windowed flanges used in video and audio tape cartridges for cosmetic purposes, the windows 62 improve high speed winding uniformity and are functional.

Rough backside coatings can also be used along with the windowed flanges to promote the escape of air from between the tape layers during winding. Alternatively, fan blades can be formed on the flanges to draw air out of the tape pack and improve winding.

In the embodiment of Figures 2-4, the flanges 32, 34 are tapered to provide a perpendicular distance between the flanges which increases from a minimum at the inner diameter of the flanges adjacent the hub 28 to a maximum at the outer diameter of the flanges at their edges. The nominal perpendicular distance between the flanges 32, 34 at the inner diameter is 1.290 cm (0.508) with a tolerance of 0.005 cm (0.002 in), providing 0.025 cm (0.010 in) of total clearance between the edge of the tape and the flanges. The nominal perpendicular distance between the flanges 32, 34 at the outer diameter is 1.326 cm (0.522) with a tolerance of 0.005 cm (0.002 in), providing 0.061 cm (0.024 in) of nominal clearance between the edge of the tape and the flanges. The difference between these perpendicular distances is the taper and is 0.036 cm (0.014 in). The taper minimizes possible interference of the tape 14 with the flanges 32, 34 by compensating for any hub wobble at the outer diameter of the tape reel 12. A minimum of 0.018 cm (0.007 in) of taper compensates for hub wobble of 0.015 (0.006 in) at the outer diameter.

The perpendicular distance between the upper flange 32 and the lower flange 34 is greater than the nominal width of the tape 14 to be wound on the reel 12 by a nominal maximum of 4.82% and an absolute maximum (including tolerances) of 5.42%. This occurs at the outer diameter of the flanges and is significantly less than the nominal 8.80% clearance and the maximum 10.6% clearance in known tape reels. The upper flange 32 and the lower flange 34 have an inner diameter corresponding substantially to the diameter of the hub 28 and an outer diameter greater than the inner diameter. In one embodiment, the perpendicular distance between the upper flange 32 and the lower flange 34 tapers from the inner diameter to the outer diameter by a maximum of 2.81% of the nominal width of the tape to be wound on the reel 12. This taper is half of the 5.62% of known tape reels.

The reduced taper and reduced clearances provide less room for the tape to wander along the tape winding surface 30 between the two flanges. Thus, lateral displacement of the tape during winding, known as stacking error, is reduced and improved tape windings can be achieved. To determine how closely the stacking error can be limited, the tolerance stack up for the hub as seated on the drive clutch of the drive mechanism and the reasonable tolerances for the manufacture of the hub and flange assembly were calculated. The clearance between the tape and the hub can not be limited to more than 0.0089 cm (0.0035 in) at the inner diameter and 0.0267 cm (0.0105 in) at the outer diameter. Less clearance would run the risk of the flanges contacting the tape during normal operation of the cartridge in the drive.

Another method of determining how closely the stacking error can be limited is to compare the tape-to-flange spacing with the tape edge-to-track edge spacing. Limiting the maximum tape stacking error to the minimum tape edge-to-track edge spacing would prevent the tape from creasing on a track when wound upon itself. A worst case analysis (with the tolerances at their maximums) shows a maximum stacking error exceeding the minimum tape edge-to-track edge spacing. Therefore, the ability to control tape stacking is limited by the tolerance stack up as discussed above.

At the inner diameter, the tape can be constrained to within 0.013 cm (0.005 in) of a nominal centerline. This permits less forceful edge guiding of the tape in the tape drive apparatus. This also prevents unsupported edges of tape strands from winding out of the centerline of the tape pack as popped strands, thereby reducing creasing due to stress relaxation of the base film and preventing head-to-tape spacing and signal losses.

This reel configuration enables the use of narrower tape. A 1.257 cm (0.495 in nominal width tape could be used. When using this tape, the nominal perpendicular distance of 1.290 cm (0.508 in) between the flanges 32, 34 at the inner diameter provides 0.033 cm (0.013 in) of total clearance between the edge of the tape and the flanges. The nominal perpendicular distance of 1.326 cm (0.522 in) between the flanges 32, 34 at the outer diameter provides 0.069 cm (0.027 in) of nominal clearance between the edge of the tape and the flanges.

The perpendicular distance between the upper flange 32 and the lower flange 34 is greater than the nominal width of the tape 14 to be wound on the reel 12 by a nominal maximum of 5.45% and an absolute maximum of 6.1%. This occurs at the outer diameter of the flanges and is significantly less than the 8.80% nominal and 10.6% maximum clearance in known tape reels with known tape widths. The upper flange 32 and the lower flange 34 have an inner diameter corresponding substantially to the diameter of the hub 28 and an outer diameter greater than the inner diameter. Using the narrower tape, at the inner diameter, the tape can be constrained to within 0.016 cm (0.0065 in) of a nominal centerline.

In another embodiment shown in Figure 5, the perpendicular distance between the upper flange 32 and the lower flange 34 remains substantially constant. This distance could be 1.278 cm (0.503 in). This would provide a total clearance of 0.020 cm (0.008 in) for a 1.6% increase over the nominal tape width when the narrower tape is used.

## Claims

1. A tape reel for use in a data tape cartridge insertable into a tape drive apparatus, the tape reel comprising:
- a substantially cylindrical hub (28) having a substantially cylindrical tape winding surface (30) around which tape (14) is wound to form a tape pack having a plurality of tape strands, and
- means for limiting the amount of tape (14) wandering along the tape winding surface to improve the quality of the tape pack, and for preventing unsupported edges of tape strands from winding out of the centerline of the tape pack thereby to reduce creasing and to prevent head-to-tape spacing and signal losses when the reel is used in a tape cartridge and the tape cartridge is inserted in the tape drive apparatus, wherein the limiting and preventing means comprises an upper flange (32) mounted on one axial end of the hub (28), and a lower flange (34) mounted on the other axial end of the hub (28), wherein the perpendicular distance between the upper flange (32) and the lower flange (34) is greater than the width of the tape (14) to be wound on the reel by a maximum of 6.1 %,
**characterized in that**
- the upper flange (32) has at least one window (62) formed therein to allow air to escape through the upper flange (32) and the lower flange (34) is substantially solid to prevent significant air escape through the lower flange (34), so that pressure from the air escaping from the tape (14) through the at least one window (62) biases the tape (14) against the lower flange (34).

2. The tape reel of claim 1 characterized in that the perpendicular distance between the upper flange (32) and the lower flange (34) is greater than the nominal width of the tape (14) to be wound on the reel by a maximum of 4.8 %.

3. The tape reel of claim 1 or 2 characterized in that the upper flange (32) and the lower flange (34) have an inner diameter corresponding substantially to the diameter of the hub (28) and an outer diameter greater than the inner diameter, and wherein the perpendicular distance between the upper flange (32) and the lower flange (34) increases and tapers from the inner diameter to the outer diameter by a maximum of 2.9 % of the nominal width of the tape (14) to be wound on the reel.

4. The tape reel of claim 1 characterized in that the perpendicular distance between the upper flange (32) and the lower flange (34) remains substantially constant.

5. A single reel data tape cartridge comprising:
- a tape reel (12) of any of claims 1-4,
- a housing (36,38),
- a leader block (16), and
- a length of tape (14) connected at one end to the leader block (16) and at the other end to the tape reel (12).

## Patentansprüche

1. Bandspule zur Verwendung in einer in ein Bandantriebsgerät einführbaren Datenbandkassette, wobei die Bandspule aufweist:
- eine im wesentlichen zylindrische Nabe (28) mit einer im wesentlichen zylindrischen Bandwickelfläche (30), um welche Band (14) zur Bildung eines Bandwickels mit mehreren Bandlagen gewickelt ist, und
- eine Einrichtung zum Begrenzen des Betrags des Wanderns des Bandes (14) entlang der Bandwickelfläche zur Verbesserung der Qualität des Bandwickels und zum Verhindern des Wickelns von ungestützten Rändern von Bandlagen aus der Mittellinie des Bandwickels heraus, wodurch Kräuseln vermieden wird, und zum Verhindern von Kopf-zu-Band-Verschiebungen und von Signalverlusten, wenn die Spule in einer Bandkassette verwendet und die Bandkassette in das Bandantriebsgerät eingesetzt ist, wobei die Begrenzungs- und Verhinderungseinrichtung (32) einen an einem axialen Ende der Nabe (28) angebrachten oberen Flansch (32) und einen am anderen axialen Ende der Nabe (28) angebrachten unteren Flansch (34) aufweist, wobei der senkrechte Abstand zwischen dem oberen Flansch (32) und dem unteren Flansch (34) maximal um 6,1% größer als die Breite des auf die Spule zu wickelnden Bandes (14) ist,
dadurch gekennzeichnet, daß
- der obere Flansch (32) mit wenigstens einem Fenster (62) ausgebildet ist, um das Entweichen von Luft durch den oberen Flansch (32) zu ermöglichen, und der untere Flansch (34) im wesentlichen massiv ist, um das Entweichen erheblicher Luftmengen durch den unteren Flansch (34) zu verhindern so daß der Druck der aus dem Band (14) durch das wenigstens eine Fenster (62) entweichenden Luft das Band (14) gegen den unteren Flansch (34) drückt.

2. Bandspule nach Anspruch 1, dadurch gekennzeichnet, daß der senkrechte Abstand zwischen dem oberen Flansch (32) und dem unteren Flansch (34) um maximal 4,8% größer ist als die nominale Breite des auf die Spule zu wickelnden Bandes (14).

3. Bandspule nach Anspruch 1 oder 2, dadurch gekennzeichnet, daß der obere Flansch (32) und der untere Flansch (34) einen Innendurchmesser, der im wesentlichen dem Durchmesser der Nabe (28) entspricht, und einen Außendurchmesser aufweisen, der größer ist als der Innendurchmesser, und wobei der senkrechte Abstand zwischen dem oberen Flansch (32) und dem unteren Flansch (34) vom Innen- zum Außendurchmesser um maximal 2,9% der nominellen Breite des auf die Nabe zu wickelnden Bandes (14) zunimmt.

4. Bandspule nach Anspruch 1, dadurch gekennzeichnet, daß der senkrechte Abstand zwischen dem oberen Flansch (32) und dem unteren Flansch (34) im wesentlichen konstant bleibt.

5. Einzelspulendatenbandkassette mit:
- einer Bandspule (12) nach einem der Ansprüche 1-4,
- einem Gehäuse (36, 38),
- einem Führungsblock (16) und
- einem an einem Ende mit dem Führungsblock (16) und am anderen Ende mit der Bandspule (12) verbundenen Band (14).

## Revendications

1. Bobine de bande destinée à être utilisée dans une cartouche de bande de données pouvant être insérée dans un dispositif d'entraînement de bande, la bobine de bande comportant :
- un moyeu pratiquement cylindrique (28) ayant une surface (30) d'enroulement de bande pratiquement cylindrique autour de laquelle une bande (14) est enroulée pour former un emballage de bande ayant plusieurs cordons de bande, et
- des moyens pour limiter la quantité de bande (14) migrant le long de la surface d'enroulement de bande pour améliorer la qualité de l'emballage de bande, et pour empêcher les bords non-supportés des cordons de bande de s'enrouler en dehors de la ligne centrale de l'emballage de bande pour réduire ainsi le plissement et pour empêcher un espacement entre la tête et la bande et des pertes de signaux lorsque la bobine est utilisée dans une cartouche de bande et la cartouche de bande est insérée dans le dispositif d'entraînement de bande, dans laquelle les moyens de limitation et d'empêchement comportent un rebord supérieur (32) monté sur une extrémité axiale du moyeu (28), et un rebord inférieur (34) monté sur l'autre extrémité axiale du moyeu (28), la distance perpendiculaire existant entre le rebord supérieur (32) et le rebord inférieur (34) étant plus grande d'un maximum de 6,1 % que la largeur de la bande (14) à enrouler sur la bobine,
caractérisée en ce que
- le rebord supérieur (32) a au moins une fenêtre (62) formée dans celui-ci pour permettre à de l'air de s'échapper à travers le rebord supérieur (32) et le rebord inférieur (34) est pratiquement plein pour empêcher un échappement d'air significatif à travers le rebord inférieur (34), de sorte que la pression de l'air s'échappant de la bande (14) à travers la au moins une fenêtre (62) rappelle la bande (14) contre le rebord inférieur (34).

2. Bobine de bande selon la revendication 1, caractérisée en ce que la distance perpendiculaire existant entre le rebord supérieur (32) et le rebord inférieur (34) est plus grande d'un maximum de 4,8 % que la largeur nominale de la bande (14) à enrouler sur la bobine.

3. Bobine de bande selon la revendication 1 ou 2, caractérisée en ce que le rebord supérieur (32) et le rebord inférieur (34) ont un diamètre intérieur correspondant pratiquement au diamètre du moyeu (28) et un diamètre extérieur plus grand que le diamètre intérieur, et dans laquelle la distance perpendiculaire existant entre le rebord supérieur (32) et le rebord inférieur (34) augmente et se rétrécit à partir du diamètre intérieur vers le diamètre extérieur d'un maximum de 2,9 % de la largeur nominale de la bande (14) à enrouler sur la bobine.

4. Bobine de bande selon la revendication 1, caractérisée en ce que la distance perpendiculaire existant entre le rebord supérieur (32) et le rebord inférieur (34) reste pratiquement constante.

5. Cartouche de bande de données à une seule bobine comportant :
- une bobine de bande (12) selon l'une quelconque des revendications 1 à 4,
- un boîtier (36, 38),
- un bloc de tête (16), et
- une longueur de bande (14) reliée, à une première extrémité, au bloc de tête (16) et, à l'autre extrémité, à la bobine de bande (12).
